# EUROPÄISCHE PATENTSCHRIFT

(11) **EP 1 488 142 B1**
(45) Veröffentlichungstag und Bekanntmachung des Hinweises auf die Patenterteilung: **22.06.2011**
(21) Anmeldenummer: 03744363.7
(22) Anmeldetag: 14.03.2003
(51) Int. Cl.: F16J 15/02

(54) **DICHTUNGSELEMENT**
SEALING ELEMENT
ELEMENT D'ETANCHEITE

(30) Priorität: 15.03.2002 DE 10211684
(43) Veröffentlichungstag der Anmeldung: 22.12.2004
(73) Patentinhaber: Johnson Controls Interiors GmbH & Co. KG, 42285 Wuppertal (DE)
(72) Erfinder: WOLFF, Martin, 45529 Hattingen (DE); BUDDE, Birgit, 42857 Remscheid (DE)
(74) Vertreter: Hemmelmann, Klaus
(86) Internationale Anmeldenummer: PCT/EP2003/002693
(87) Internationale Veröffentlichungsnummer: WO 2003/078872

(56) Entgegenhaltungen:
- WO-A-95/09998
- GB-A- 591 901

## Beschreibung

Die Erfindung bezieht sich auf ein Dichtungselement zur Abdichtung von zueinander positionierbaren Bauteilgruppen insb. für eine Verwendung für den Fahrzeug- und Gebäudetechnikbereich, wobei das Dichtungselement ein eine Dichtfunktion erfüllendes, einen Weichanteil aufweisendes erstes Dichtungsteil und ein eine Verstärkungsfunktion erfüllendes, einen Hartanteil aufweisendes zweites Dichtungsteil umfaßt.

### Stand der Technik

Aus dem Stand der Technik sind verschiedene Dichtungselemente der genannten Art bekannt siehe z.B. EP-A-0 213 977. Es sind dabei zum einen Dichtungselemente bekannt, die nur aus einem weichen Material bestehen und bei einer offenen Profilgestaltung, die ohne weitere Zusatzmaßnahmen hergestellt werden kann, bei Belastungen speziell quer zur Dichtungslage zu Verwerfungen des Profiles des Dichtungselementes neigen, was zu einer Undichtigkeit und ggfs. zum Funktionsausfall führt. Weiterhin sind aus dem Stand der Technik auch Dichtungselemente mit einem mehrstofflichen Aufbau bekannt. So ist z.B. aus der DE 696 04 094 T2 ein Dichtungsprofil sowie ein Verfahren zur Herstellung desselben bekannt, das mittels Extrusion hergestellt ist und eine Verstärkung aus Thermoplast sowie eine Beschichtung aus Elastomer aufweist, wobei die Verstärkung aus fasergefülltem Thermoplast besteht und von mindestens einem Film bzw. einer dünnen Schicht von nicht fasergefülltem Thermoplast vollständig bedeckt ist, an der die Beschichtung aus Elastomer anhaftet. Eine derartige Anordnung erfüllt zwar die Anforderungen hinsichtlich der Erfordernisse betr. die Funktionseigenschaften, allerdings ist hier der konstruktive Aufbau sehr aufwendig und dadurch die Herstellung ebenfalls aufwendig und kostenintensiv.

### Aufgabe

Ausgehend von den bekannten Ausführungsformen von Dichtungselementen liegt der Erfindung die Aufgabe zugrunde, die bekannten Dichtungselemente unter Beibehaltung der bisherigen Vorteile in der Weise zu verbessern bzw. weiterzuentwickeln, daß ein Abdichtungsaufbau zur Verfügung gestellt wird, bei dem die Dichtfunktion in vollem Umfang gegeben ist und bei dem eine Stabilisierung gegen Verformungsbelastungen vorhanden ist, welche zu Funktionseinschränkungen oder zum Funktionsausfall führen können. Es soll dabei eine kostengünstige, in reproduzierbarer Qualität einfach herstellbare und optisch gute Ausführung realisiert werden.

### Lösung

Die Aufgabe wird erfindungsgemäß dadurch gelöst, daß das Dichtungselement im wesentlichen ringförmig ausgebildet ist, ein im wesentlichen bogenförmig ausgebildetes, in Funktionsstellung nach innen gerichtetes erstes Dichtungsteil mit Weichanteil und ein an dem nach innen ragenden Ende des ersten Dichtungsteiles angeordnetes zweites im wesentlichen rahmenförmiges Dichtungsteil mit Hartanteil aufweist. Auf diese Weise wird erstmalig mit einfachen Mitteln die Möglichkeit geschaffen, ein Dichtungselement mit einem einfachen Aufbau zwischen zwei Bauteilgruppen einzusetzen, wobei beim Fügen der Baugruppen auch eine quer zur Dichtungslage wirkende Belastung kompensiert werden kann; dies erfolgt bei dem erfindungsgemäßen Dichtungselement dadurch, daß der Hartanteil des zweiten Dichtungsteiles die Geometrie des Weichanteiles des ersten Dichtungsteiles stabilisiert und wirkende Querkräfte aufgenommen werden können, wodurch eine mögliche Profilverwerfung verhindert wird. Es erfolgt dabei die Dichtfunktion selbst weiterhin durch Dichtungsanlage über den Weichanteil.

Bei dem erfindungsgemäßen Dichtungselement wird dabei durch das im wesentlichen rahmenförmige zweite Dichtungteil mit Hartanteil die quer zur Dichtungsrichtung wirkende Belastung so aufgenommen, daß eine Bereichsverwerfung des Dichtungselementes nicht mehr stattfinden kann, wobei eine dichtende Verformung des Weichanteiles in Dichtungsrichtung funktionsgemäß weiterhin vorhanden ist und zudem eine gleichmäßige Dichtungsanlage durch diesen Aufbau unterstützt wird, da eine bereichsweise Profileinfallung durch die Stützwirkung des rahmenförmigen Dichtungsteiles mit Hartanteil verhindert wird. Es ergibt sich somit insgesamt ein Dichtungselement, das keine Profilverwerfung mehr zuläßt und dadurch die Funktionssicherheit erhöht, das eine Abstützwirkung des gesamten weichen Profiles in Dichtungsrichtung bewirkt und dadurch zur Qualitätsoptimierung beiträgt und das kostengünstig in Verfahrensfolge herstellbar ist. Das erfindungsgemäße Dichtungselement läßt sich außerdem optisch gut ausführen und bietet eine erhöhte Gestaltungsfreiheit.

Bei der bevorzugten Ausführungsform des erfindungsgemäßen Dichtungselementes ist das zweite Dichtungsteil mit Hartanteil als umlaufende Verstärkung ausgebildet. Diese Ausbildung ist in konstruktiver Hinsicht besonders vorteilhaft.

Nach einem weiteren Merkmal der vorliegenden Erfindung ist das zweite Dichtungsteil mit Hartanteil als durch Spritzgießen angeformtes Teil- Element ausgebildet. Diese Ausbildung ist in fertigungstechnischer Hinsicht vorteilhaft.

Es empfiehlt sich nach einem weiteren Merkmal der vorliegenden Erfindung, daß das im wesentlichen ringförmig ausgebildete Dichtungselement als geschlossener Ring ausgebildet ist. Dies ist eine für die Erzielung einer guten Abdichtung vorteilhafte Ausgestaltungsform.

Zweckmäßig ist es nach einem weiteren Merkmal, daß das zweite im wesentlichen rahmenförmige Dichtungsteil des Dichtungselementes nicht im direkten Sichtbereich angeordnet ist. In diesem Falle erübrigt sich das Vorsehen von zusätzlichen, optisch wirkenden Mitteln zur Verbesserung der äußeren Erscheinungsform.

Bei einer alternativen Ausführungsform ist das zweite im wesentlichen rahmenförmige Dichtungsteil des Dichtungselementes im direkten Sichtbereich angeordnet.

Weiterhin empfiehlt es sich, daß das zweite im wesentlichen rahmenförmige Dichtungsteil des Dichtungselementes farbgleich mit dem ersten Dichtungsteil ausgebildet ist.

Nach einem letzten Merkmal der vorliegenden Erfindung weist in dem Fall, daß das zweite im wesentlichen rahmenförmige Dichtungsteil des Dichtungselementes im direkten Sichtbereich angeordnet ist, dieses zweite im wesentlichen rahmenförmige Dichtungsteil insb. zusammen mit dem ersten Dichtungsteil eine Überspritzung auf.

### Figuren

Die Erfindung ist in der einzigen Figur der Zeichnung in einem Ausführungsbeispiel dargestellt. Es zeigt:

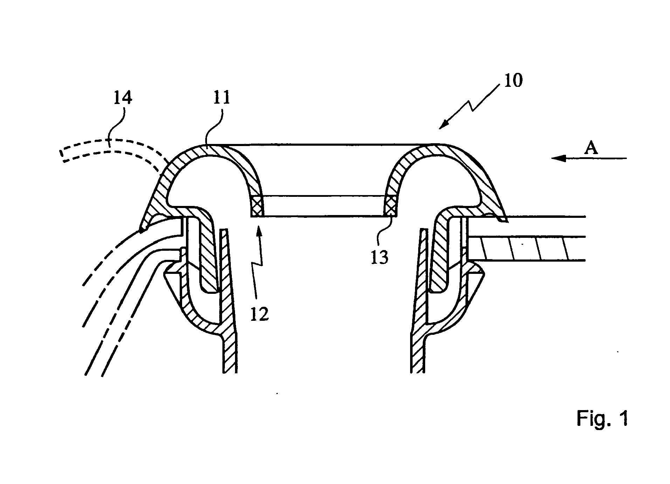

- **Fig. 1**: einen Vertikalschnitt der einzigen Ausführungsform des erfindungsgemäßen Dichtungselementes, in diesem Falle für eine Luftaustrittsabdichtung einer Türverkleidung an der B- Säule eines Fahrzeuges.

Das erfindungsgemäße Dichtungselement ist generell mit 10 bezeichnet. Das Dichtungselement 10 dient zur Abdichtung von zueinander positionierbaren Bauteilgruppen insb. für eine Verwendung für den Fahrzeug- und Gebäudetechnikbereich. Das Dichtungselement 10 umfaßt ein eine Dichtfunktion erfüllendes, einen Weichanteil aufweisendes, mit 11 bezeichnetes erstes Dichtungsteil und ein eine Verstärkungsfunktion erfüllendes, einen Hartanteil aufweisendes, mit 12 bezeichnetes zweites Dichtungsteil. Es ist dazu in der Fig.1 der Zeichnung das erfindungsgemäße Dichtungselement 10 mit dem ersten Dichtungsteil 11 und dem zweiten Dichtungsteil 12 dargestellt, wobei das Dichtungselement 10 hier zwischen zwei angedeutet dargestellten, nicht bezeichnete Bauteilgruppen eingesetzt ist. Dabei ist in strichpunktierten Linien eine mit 14 bezeichnete Profilverwerfung des ersten Dichtungsteiles 11 mit Weichanteil eines Dichtungselementes 10 dargestellt, wie es aus dem Stand der Technik bekannt ist.

Das Dichtungselement 10 ist nun erfindungsgemäß im wesentlichen ringförmig ausgebildet, es weist ein im wesentlichen bogenförmig ausgebildetes, in Funktionsstellung nach innen gerichtetes erstes Dichtungsteil 11 mit Weichanteil und ein an dem nach innen ragenden Ende des ersten Dichtungsteiles 11 angeordnetes zweites im wesentlichen rahmenförmiges Dichtungsteil 12 mit Hartanteil auf. Es ist dabei das zweite Dichtungsteil 12 mit Hartanteil als umlaufende Verstärkung 13 ausgebildet. Dabei kann bevorzugt dieses zweite Dichtungsteil 12 mit Hartanteil als durch Spritzgießen angeformtes Teil- Element ausgebildet sein.

Das im wesentlichen ringförmig ausgebildete Dichtungselement 10 ist in dem dargestellten Ausführungsbeispiel als geschlossener Ring ausgebildet. Dieser geschlossene Ring ist bei dieser Ausführung beispielhaft für den Einsatz an einer Luftaustrittsabdichtung einer Türverkleidung an der B- Säule eines Fahrzeuges vorgesehen. Es kann in diesem Falle bei einer gesonderten Belüftung des Fondbereiches eines Fahrzeuges die Luft aus dem Schalttafelbereich in die Tür und über einen Luftkanal in die B- Säule und von dort in den Fondraum geleitet werden. Dabei sind die Übergänge der Bauteile gegen Luftaustritt abzudichten,wobei in der Türverkleidung Rosetten mit Abdichtungen eingesetzt werden können. Speziell im hinteren Türbereich kann es bedingt durch die Fahrzeugstruktur möglich sein, daß die Schließrichtung der Türe quer zur Dichtungsführung erfolgt. Dabei treten an der weichen Abdichtung Querkräfte auf, die zu profilverwerfenden Belastungen führen können. Die dargestellte Lösungsmöglichkeit besteht in einer Abdichtung, die als 2- Komponenten Spritzgußteil mit einem Weichanteil für die Dichtung selbst und einem umlaufenden rahmenförmigen Hartanteil, das am offenen Geometrieende des Weichanteiles fest angebunden ist, in Verfahrensfolge einteilig hergestellt wird.

Das erfindungsgemäße Dichtungselement 10 läßt sich zwischen zwei Bauteilgruppen einzusetzen, wobei beim Fügen der Baugruppen auch eine quer zur Dichtungslage wirkende Belastung, siehe Pfeil A in Fig.1, kompensiert werden kann; dies erfolgt bei dem erfindungsgemäßen Dichtungselement 10 dadurch, daß der Hartanteil des zweiten Dichtungsteiles 12 die Geometrie des Weichanteiles des ersten Dichtungsteiles 11 stabilisiert und wirkende Querkräfte aufgenommen werden können, wodurch eine mögliche Profilverwerfung verhindert wird. Es erfolgt dabei die Dichtfunktion selbst weiterhin durch Dichtungsanlage über den Weichanteil.

Bei dem erfindungsgemäßen Dichtungselement 10 wird dabei durch das im wesentlichen rahmenförmige zweite Dichtungteil 12 mit Hartanteil die quer zur Dichtungsrichtung wirkende Belastung gemäß Pfeil A so aufgenommen, daß eine Bereichsverwerfung des Dichtungselementes 10 nicht mehr stattfinden kann, wobei eine dichtende Verformung des Weichanteiles in Dichtungsrichtung funktionsgemäß weiterhin vorhanden ist und zudem eine gleichmäßige Dichtungsanlage durch diesen Aufbau unterstützt wird, da eine bereichsweise Profileinfallung durch die Stützwirkung des rahmenförmigen Dichtungsteiles 12 mit Hartanteil verhindert wird. Es ergibt sich somit insgesamt ein Dichtungelement 10, das keine Profilverwerfung mehr zuläßt und dadurch die Funktionssicherheit erhöht, das eine Abstützwirkung des gesamten weichen Profiles in Dichtungsrichtung bewirkt und dadurch zur Qualitätsoptimierung beiträgt und das kostengünstig in Verfahrensfolge herstellbar ist.

Das erfindungsgemäße Dichtungselement 10 läßt sich außerdem optisch gut ausführen und bietet eine erhöhte Gestaltungsfreiheit. So kann bei einer bevorzugten Ausführungsform das zweite im wesentlichen rahmenförmige Dichtungsteil 12 des Dichtungselementes 10 nicht im direkten Sichtbereich angeordnet sein. Bei einer anderen Ausführungsform kann das zweite im wesentlichen rahmenförmige Dichtungsteil 12 des Dichtungselementes 10 im direkten Sichtbereich angeordnet sein. In diesem Fall kann das zweite im wesentlichen rahmenförmige Dichtungsteil 12 insb. zusammen mit der ersten Dichtungsteil 11 eine hier nicht näher bezeichnete Überspritzung aufweisen. Dabei ist allerdings bei der Fertigung ein etwas erhöhter Werkzeugauwand erforderlich. Außerdem ist auch möglich, daß das zweite im wesentlichen rahmenförmige Dichtungsteil 12 des Dichtungselementes 10 farbgleich mit dem ersten Dichtungsteil 11 ausgebildet ist.

Für das erfindungsgemäße Dichtungselement 10 ergeben sich unterschiedliche Anwendungsmöglichkeiten insb. im Fahrzeug- und Gebäudetechnikbereich. So ist das erfindungsgemäße Dichtungselement 10 z.B. einsetzbar für alle Abdichtungen wie z.B. Luftführungsabdichtungen mit Abstützungsbedarf z.B. an Fahrzeugteilen. Weiterhin vorgesehen ist ein Einsatz auch zur Anlagekantenoptimierung von einem weichen Bauteil zu einem Aufnahmebauteil.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So sind insb. Abwandlungen bzgl. der konstruktiven Ausgestaltung des Dichtungselementes 10 bzw. von dessen ersten Dichtungsteil 11 mit Weichanteil und/ oder von dessen zweiten Dichtungsteil 12 mit Hartanteil denkbar. Weiterhin vorgesehen sind selbstverständlich Anwendungen bei anderen als in der Fig. der Zeichnung dargestellten Bauteilgruppen.

### Bezugszeichenliste

- 10: Dichtungselement
- 11: erstes Dichtungsteil (von 10 - mit Weichanteil)
- 12: zweites Dichtungsteil (von 10 - mit Hartanteil)
- 13: umlaufende Verstärkung
- 14: Profilverwerfung (nach S.d.T.)

## Patentansprüche

1. Dichtungselement (10) zur Abdichtung von zueinander positionierbaren Bauteilgruppen für den Einsatz an einer Luftaustrittsabdichtung einer Türverkleidung eines Fahrzeugs, wobei das Dichtungselement (10) im Wesentlichen ringförmig ausgebildet ist und ein eine Dichtfunktion erfüllendes erstes Dichtungsteil (11) mit einem Weichanteil aufweist, welches im Wesentlichen bogenförmig ausgebildet und in Funktionsstellung nach innen gerichtet ist,
**dadurch gekennzeichnet, dass** das Dichtungselement (10) ferner ein eine Verstärkungsfunktion erfüllendes, einen Hartanteil aufweisendes zweites Dichtungsteil (12) umfasst, welches an dem nach innen ragenden Ende des ersten Dichtungsteiles (11) angeordnet und im Wesentlichen rahmenförmig ausgebildet ist.

2. Dichtungselement nach Anspruch 1,
**dadurch gekennzeichnet, daß** das zweite Dichtungsteil (12) mit Hartanteil als umlaufende Verstärkung (13) ausgebildet ist.

3. Dichtungselement nach Anspruch 1 oder 2,
**dadurch gekennzeichnet, daß** das zweite Dichtungsteil (12) mit Hartanteil als durch Spritzgießen angeformtes Teil- Element ausgebildet ist.

4. Dichtungselement nach einem der Ansprüche 1 bis 3,
**dadurch gekennzeichnet, daß** das im wesentlichen ringförmig ausgebildete Dichtungselement (10) als geschlossener Ring ausgebildet ist.

5. Dichtungselement nach einem der Ansprüche 1 bis 4,
**dadurch gekennzeichnet, daß** das zweite im wesentlichen rahmenförmige Dichtungsteil (12) des Dichtungselementes (10) nicht im direkten Sichtbereich angeordnet ist.

6. Dichtungselement nach einem der Ansprüche 1 bis 4,
**dadurch gekennzeichnet, daß** das zweite im wesentlichen rahmenförmige Dichtungsteil (12) des Dichtungselementes (10) im direkten Sichtbereich angeordnet ist.

7. Dichtungselement nach einem der Ansprüche 1 bis 6,
**dadurch gekennzeichnet, daß** das zweite im wesentlichen rahmenförmige Dichtungsteil (12) des Dichtungselementes (10) farbgleich mit dem ersten Dichtungsteil (11) ausgebildet ist.

8. Dichtungselement nach Anspruch 6,
**dadurch gekennzeichnet, daß** das zweite im wesentlichen rahmenförmige Dichtungsteil (12) des Dichtungselementes (10) insb. zusammen mit dem ersten Dichtungsteil (11) eine Überspritzung aufweist.

## Claims

1. Sealing element (10) for sealing off component groups positionable in relation to one another, for use on an air outlet seal of door trim of a vehicle, the sealing element (10) being of essentially annular design and having a first seal part (11) which performs a sealing function and has a soft fraction and which is of essentially arcuate design and is directed inwards in the operating position, **characterized in that** the sealing element (10) comprises, furthermore, a second seal part (12) which performs a reinforcing function and has a hard fraction and is arranged at the inwardly projecting end of the first seal part (11) and which is of essentially frame-shaped design.

2. Sealing element according to Claim 1,
**characterized in that**
the second seal part (12) with a hard fraction is designed as a peripheral reinforcement (13).

3. Sealing element according to Claim 1 or 2,
**characterized in that**
the second seal part (12) with a hard fraction is designed as a part element integrally formed by injection molding.

4. Sealing element according to one of Claims 1 to 3,
**characterized in that**
the essentially annularly designed sealing element (10) is designed as a closed ring.

5. Sealing element according to one of Claims 1 to 4,
**characterized in that**
the essentially frame-shaped second seal part (12) of the sealing element (10) is not arranged in direct range of vision.

6. Sealing element according to one of Claims 1 to 4,
**characterized in that**
the essentially frame-shaped second seal part (12) of the sealing element (10) is arranged in direct range of vision.

7. Sealing element according to one of Claims 1 to 6,
**characterized in that**
the essentially frame-shaped second seal part (12) of the sealing element (10) is designed with the same color as the first seal part (11).

8. Sealing element according to Claim 6,
**characterized in that**
the essentially frame-shaped second seal part (12) of the sealing element (10), in particular together with the first seal part (11), has an injection overmolding.

## Revendications

1. Elément d'étanchéité (10) pour étanchéifier des groupes de composants pouvant être positionnés les uns par rapport aux autres pour l'utilisation sur une garniture d'étanchéité de sortie d'air d'un habillage de porte d'un véhicule, l'élément d'étanchéité (10) étant réalisé substantiellement sous forme annulaire et présentant une première partie d'étanchéité (11) réalisant une fonction d'étanchéité, avec une partie souple, qui est réalisée substantiellement sous forme courbe et qui est orientée vers l'intérieur dans la position fonctionnelle,
**caractérisé en ce que** l'élément d'étanchéité (10) comprend en outre une deuxième partie d'étanchéité (12) réalisant une fonction de renforcement, présentant une partie dure, qui est disposée à l'extrémité de la première partie d'étanchéité (11) saillant vers l'intérieur et qui est réalisée substantiellement en forme de cadre.

2. Elément d'étanchéité selon la revendication 1,
**caractérisé en ce que**
la deuxième partie d'étanchéité (12) est réalisée avec la partie dure en tant que renforcement périphérique (13).

3. Elément d'étanchéité selon la revendication 1 ou 2,
**caractérisé en ce que**
la deuxième partie d'étanchéité (12) est réalisée avec la partie dure en tant qu'élément partiel façonné par moulage par injection.

4. Elément d'étanchéité selon l'une quelconque des revendications 1 à 3,
**caractérisé en ce que**
l'élément d'étanchéité (10) réalisé substantiellement sous forme annulaire est réalisé sous forme d'anneau fermé.

5. Elément d'étanchéité selon l'une quelconque des revendications 1 à 4,
**caractérisé en ce que**
la deuxième partie d'étanchéité (12) substantiellement en forme de cadre de l'élément d'étanchéité (10) n'est pas disposée dans la région directement visible.

6. Elément d'étanchéité selon l'une quelconque des revendications 1 à 4,
**caractérisé en ce que**
la deuxième partie d'étanchéité (12) substantiellement en forme de cadre de l'élément d'étanchéité (10) est disposée dans la région directement visible.

7. Elément d'étanchéité selon l'une quelconque des revendications 1 à 6,
**caractérisé en ce que**
la deuxième partie d'étanchéité (12) substantiellement en forme de cadre de l'élément d'étanchéité (10) est réalisée avec la même couleur que la première partie d'étanchéité (11).

8. Elément d'étanchéité selon la revendication 6,
**caractérisé en ce que** la deuxième partie d'étanchéité (12) substantiellement en forme de cadre de l'élément d'étanchéité (10) présente en particulier conjointement avec la première partie d'étanchéité (11) un surmoulage.
